# EUROPEAN PATENT APPLICATION

(11) **EP 3 068 092 A1**
(43) Date of publication of application: **14.09.2016**
(21) Application number: 14791754.6
(22) Date of filing: 06.05.2014
(51) Int. Cl.: H04L 29/06

(54) **METHOD AND DEVICE FOR INTERACTING WITH ONLINE CHARGING SYSTEM, AND SERVER**

(30) Priority: 05.11.2013 CN 201310542459
(71) Applicant: ZTE Corporation, Shenzhen, Guangdong 518057 (CN)
(72) Inventor: YANG, Jianjun, Shenzhen Guangdong 518057 (CN); SHAO, Xingxing, Shenzhen Guangdong 518057 (CN); ZHOU, Jialin, Shenzhen Guangdong 518057 (CN)
(74) Representative: Novagraaf Technologies
(86) International application number: PCT/CN2014/076884
(87) International publication number: WO 2014/177068

(57) **Abstract**

Provided are a method and device for interacting with an online charging system, and a server. In the method, a Diameter protocol field format corresponding to a service type of a charging service is determined according to the service type of the charging service; Diameter protocol encapsulation is conducted on charging-related information of the charging service according to the Diameter protocol field format to obtain a Diameter protocol request message; and according to the Diameter protocol request message, an interaction with the online charging system is conducted and the online charging system is requested to conduct charging processing on the charging service. The technical scheme improves the efficiency of online charging.

## Description

### Technical Field

The present disclosure relates to the field of Intelligent Network (IN) communications, and in particular to a method and device for interacting with an Online Charging System (OCS), and a server.

### Background

With the advent of full-service operation era, the telecom operators jump into a new round of market competition. For adapting to the requirements of service development in future, the telecom operators are sparing no effort to improve the supporting capacity of a service system. The OCS is a necessary means of the telecom operator for improving its supporting capacity. The OCS is one of the most important components in the 3GPP network architecture. The OCS overcomes non-real-time of a Business & Operation Support System (BOSS) system and inflexibility of the IN system. The OCS can implement a support of multiple services aiming at the scarce supporting capacity of the IN system for a data service. In addition, the OCS integrates data of an IN platform, a service management platform and the BOSS system, so that the user's sense experience is improved, bundling-sale of the post-paid services and pre-paid services to the user can be flexibly supported, and the arrearage risk of user can also be efficiently avoided.

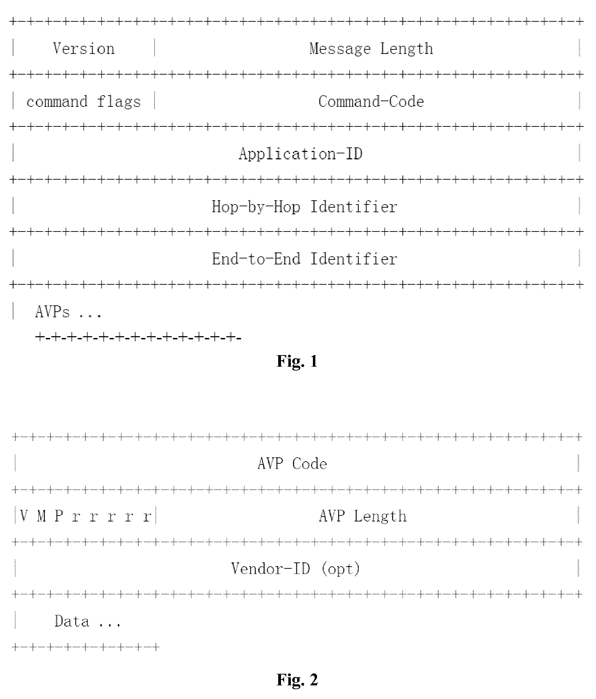

At present, a charging service (pre-paid or post-paid service) in the IN system widely needs to be interconnected with the OCS. Generally, the OCS opens a Diameter protocol, that is, the IN charging service needs to interact with the OCS via the Diameter protocol to implement a charging function. The structure of the Diameter protocol is shown in Fig. 1.

The Diameter protocol is composed of one header and one or multiple following Attribute-Value-Pairs (AVP).

The structure of the AVP is shown in Fig. 2.

One Diameter protocol may contain one or multiple AVP fields, wherein there is a level structure between the AVPs, and each AVP field expresses one field related to charging, such as a caller number, a called number, a service type and starting time.

Coding and decoding the Diameter protocol in such service is a very tedious work. Whenever a Diameter protocol request message for a charging service is sent to the OCS, the service developer needs to manually check and manually configure a Diameter protocol field format corresponding to the charging service, which results in low efficiency of online charging.

### Summary

In view of the above, the embodiments of the present disclosure provide a method and device for interacting with an OCS, and a server, for improving the efficiency of online charging.

The technical solutions of the embodiments of the present disclosure are implemented as follows.

A method for interacting with the OCS is provided, which may include that:
a Diameter protocol field format corresponding to a service type of a charging service is determined according to the service type of the charging service;

Diameter protocol encapsulation is conducted on charging-related information of the charging service according to the Diameter protocol field format to obtain a Diameter protocol request message; and
according to the Diameter protocol request message, an interaction with the OCS is conducted, and the OCS is requested to conduct charging processing on the charging service.

In an exemplary embodiment, determining, according to the service type of the charging service, the Diameter protocol field format corresponding to the service type may include that:
a storage space corresponding to the service type is determined according to the service type; and
a Diameter protocol field format stored in the storage space is extracted as the Diameter protocol field format.

In an exemplary embodiment, before determining, according to the service type, the storage space corresponding to the service type, the method may further include that:
update information of the Diameter protocol field format corresponding to the service type is obtained; and
the Diameter protocol field format stored in the storage space is updated according to the update information of the Diameter protocol field format.

In an exemplary embodiment, conducting the Diameter protocol encapsulation on the charging-related information of the charging service according to the Diameter protocol field format to obtain the Diameter protocol request message may include that:
according to the Diameter protocol field format, assignment information which corresponds to a field parameter of each field conforming to the Diameter protocol field format is resolved from the charging-related information; and
the Diameter protocol encapsulation is conducted on all the assignment information according to the Diameter protocol field format and a Diameter protocol expression format to obtain the Diameter protocol request message.

In an exemplary embodiment, conducting the Diameter protocol encapsulation on all the assignment information according to the Diameter protocol field format and the Diameter protocol expression format to obtain the Diameter protocol request message may include that:
message encapsulation is conducted on all the assignment information according to the Diameter protocol field format and a message expression format to obtain a message conforming to the message expression format; and
format conversion is conducted on the message conforming to the message expression format according to a format conversion way of converting the message expression format to the Diameter protocol expression format, to obtain the Diameter protocol request message.

In an exemplary embodiment, the method may further include that:
an interaction with the OCS is conducted, and a Diameter response message sent in response to the Diameter protocol request message is received from the OCS, wherein the Diameter response message carries charging response information corresponding to the charging-related information; and

Diameter protocol de-encapsulation is conducted on the Diameter response message according to the Diameter protocol field format to obtain the charging response information.

A device for interacting with the OCS is also provided, which may include:
a determining component, which is configured to determine, according to the service type of the charging service, a Diameter protocol field format corresponding to the service type;
an encapsulating component, which is configured to conduct Diameter protocol encapsulation on charging-related information of the charging service according to the Diameter protocol field format to obtain the Diameter protocol request message; and
a first interacting component, which is configured to, according to the Diameter protocol request message, interact with the OCS and request the OCS to conduct the charging processing on the charging service.

In an exemplary embodiment, the determining component may include:
a determining subcomponent, which is configured to determine, according to the service type, the storage space corresponding to the service type; and
an extracting subcomponent, which is configured to extract a Diameter protocol field format stored in the storage space as the Diameter protocol field format.

In an exemplary embodiment, the device may further include:
an obtaining component, which is configured to, before the determining subcomponent determines, according to the service type, the storage space corresponding to the service type, obtain the update information of the Diameter protocol field format corresponding to the service type; and
an updating component, which is configured to, before the determining subcomponent determines, according to the service type, the storage space corresponding to the service type, update, according to the update information of the Diameter protocol field format, the Diameter protocol field format stored in the storage space.

In an exemplary embodiment, the encapsulating component may include:
a resolving subcomponent, which is configured to, according to the Diameter protocol field format, resolve, from the charging-related information, the assignment information which corresponds to the field parameter of each field conforming to the Diameter protocol field format; and
an encapsulating subcomponent, which is configured to conduct the Diameter protocol encapsulation on all the assignment information according to the Diameter protocol field format and the Diameter protocol expression format to obtain the Diameter protocol request message.

In an exemplary embodiment, the encapsulating subcomponent may include:
an encapsulating element, which is configured to conduct message encapsulation on all the assignment information according to the Diameter protocol field format and a message expression format to obtain a message conforming to the message expression format; and
a converting element, which is configured to conduct format conversion on the message conforming to the message expression format according to a format conversion way of converting the message expression format to the Diameter protocol expression format, to obtain the Diameter protocol request message.

In an exemplary embodiment, the device may further include:
a second interacting component, which is configured to interact with the OCS, and receive from the OCS the Diameter response message sent in response to the Diameter protocol request message, wherein the Diameter response message carries the charging response information corresponding to the charging-related information; and
a de-encapsulating component, which is configured to conduct Diameter protocol de-encapsulation on the Diameter response message according to the Diameter protocol field format to obtain the charging response information.

A server is also provided, which includes the above-mentioned device for interacting with the OCS.

It can be seen from above that the embodiments of the present disclosure have the following beneficial effect.

Afield format needed for conducting the Diameter protocol encapsulation on the charging-related information is obtained according to the service type of the charging service, instead of manually checking the Diameter protocol field format corresponding to the charging service and manually configuring the Diameter protocol field format, thereby improving the efficiency of online charging.

### Brief Description of the Drawings

Fig. 1 is a structure diagram of a Diameter protocol;
Fig. 2 is a structure diagram of AVP;
Fig. 3 is a flowchart of a method for interacting with an OCS provided by an embodiment of the present disclosure;
Fig. 4 is a deployment diagram of logical components according to an exemplary embodiment of the present disclosure;
Fig. 5 is a flowchart 1 of an exemplary embodiment of the present disclosure;
Fig. 6 is a flowchart 2 of an exemplary embodiment of the present disclosure; and
Fig. 7 is a flowchart 3 of an exemplary embodiment of the present disclosure.

### Detailed Description of the Embodiments

For making the aim, the technical solutions and the advantages of the present disclosure more clear, the present disclosure is elaborated below in combination with the accompanying drawings and specific embodiments.

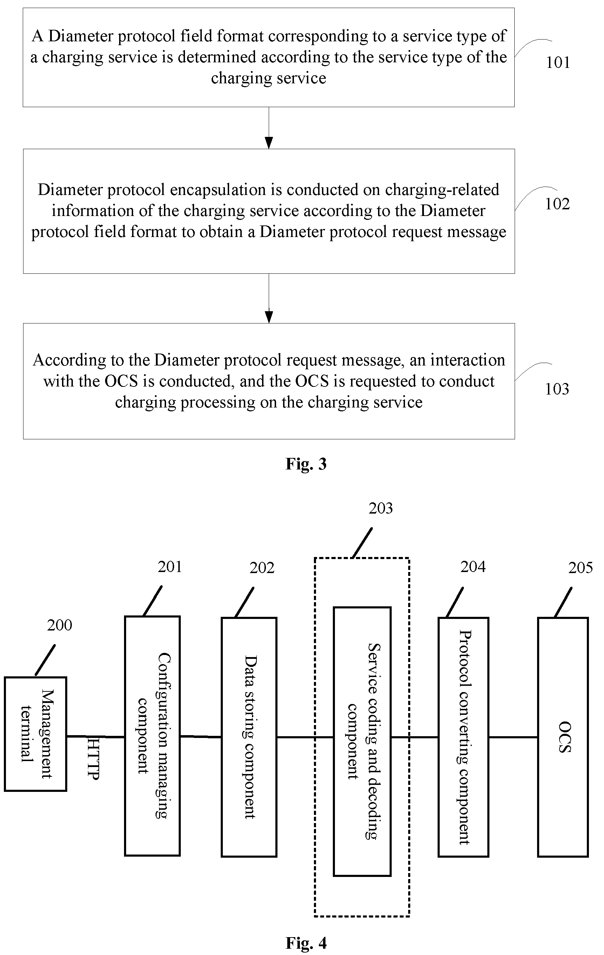

Fig. 3 is a flowchart of a method for interacting with an OCS provided by an embodiment of the present disclosure. As shown in Fig. 3, an embodiment of the present disclosure provides a method for interacting with the OCS, which includes the following steps:
Step 101: a Diameter protocol field format corresponding to a service type of a charging service is determined according to the service type of the charging service;
Step 102: Diameter protocol encapsulation is conducted on charging-related information of the charging service according to the Diameter protocol field format to obtain a Diameter protocol request message; and
Step 103: according to the Diameter protocol request message, an interaction with the OCS is conducted, and the OCS is requested to conduct charging processing on the charging service.

It can be seen from above that the field format needed for conducting the Diameter protocol encapsulation on the charging-related information can be obtained according to the service type of the charging service, instead of manually checking the Diameter protocol field format corresponding to the charging service and manually configuring the Diameter protocol field format, thereby improving the efficiency of online charging.

In the embodiment, the service type may be, for example, a pre-paid service, a Virtual Private Network (VPN) service, a called party paying service, and so on.

The Diameter protocol field format may include: information field included in a message header field conforming to a standard Diameter protocol, the number of AVP fields, information of level structure between the AVP fields and information field included in each AVP field.

The charging-related information may be information, which is related to the field parameter in the Diameter protocol field format, in the charging service.

In an exemplary embodiment of the present disclosure, determining, according to the service type of the charging service, the Diameter protocol field format corresponding to the service type may include that:
a storage space corresponding to the service type is determined according to the service type; and
a Diameter protocol field format stored in the storage space is extracted as the Diameter protocol field format.

In an exemplary embodiment, considering that the Diameter protocol field format corresponding to the service type may change,
before determining, according to the service type, the storage space corresponding to the service type, the method may further include that:
update information of the Diameter protocol field format corresponding to the service type is obtained; and
the Diameter protocol field format stored in the storage space is updated according to the update information of the Diameter protocol field format.

In an exemplary embodiment of the present disclosure, conducting the Diameter protocol encapsulation on the charging-related information of the charging service according to the Diameter protocol field format to obtain the Diameter protocol request message may include that:
the assignment information which corresponds to the field parameter of each field conforming to the Diameter protocol field format is resolved from the charging-related information according to the Diameter protocol field format; and

Diameter protocol encapsulation is conducted on all the assignment information according to the Diameter protocol field format and a Diameter protocol expression format to obtain the Diameter protocol request message.

In an exemplary embodiment, for facilitating implementation, it is possible to introduce an intermediate message in the process of Diameter protocol encapsulation, then,
conducting the Diameter protocol encapsulation on all the assignment information according to the Diameter protocol field format and the Diameter protocol expression format to obtain the Diameter protocol request message may include that:
message encapsulation is conducted on all the assignment information to obtain a message conforming to a message expression format according to the Diameter protocol field format and the message expression format; and
format conversion is conducted on the message conforming to the message expression format according to a format conversion way of converting the message expression format to the Diameter protocol expression format, to obtain the Diameter protocol request message.

As an example, the message expression format may be, for example, a standard C-language data structure which contains charging information, such as a charge caller number strchargecaller with a length of 30 bits, a charge called number strchargecalled with a length of 30 bits; the C-language data structure may also contain a substructure.

In an exemplary embodiment of the present disclosure, the method may also include that:
an interaction with the OCS is conducted, and the Diameter response message sent in response to the Diameter protocol request message is received from the OCS, wherein the Diameter response message carries the charging response information corresponding to the charging-related information; and

Diameter protocol de-encapsulation is conducted on the Diameter response message according to the Diameter protocol field format to obtain the charging response information.

For describing the embodiments of the present disclosure more clearly, an exemplary embodiment of the present disclosure is provided below.

The exemplary embodiment provides a method and device for implementing an online charging service flexibly, preferably using the OCS.

Coding and decoding a Diameter protocol in the charging service is a very tedious work and takes most of the service developer's time. If a Diameter header field or header information of a certain AVP is to be modified, it is necessary to modify codes, which undoubtedly prolongs the period, especially when such a small modification is relatively frequent during the release of a version. Meanwhile, it is also necessary to modify codes to add or delete the AVP in a certain range (in an AVP list supported by the service), then this period becomes longer. The Diameter coding and decoding of this part cannot be well migrated to a different service, that is, if a charging function of one service is developed, it is needed to redevelop the charging function again in the next service, which cannot provide a service quickly to meet the requirements of telecom operators.

The exemplary embodiment concentrates on solving the above problems, so that the developer can complete coding and decoding of the Diameter protocol interfacing with the OCS by simply configuring a call, and can have the time to focus on solving the problem of service process. At the same time, the maintainer can configure the header information of Diameter and AVP flexibly on the basis of not modifying the version, and add or delete an AVP parameter in the range of AVPs supported by the service to meet the running requirements of the present network.

Fig. 4 is a deployment diagram of logical components according to an exemplary embodiment of the present disclosure. As shown in Fig. 4, the device for implementing the online charging service flexibly which is provided by the exemplary embodiment may include: a data storing component 202, a configuration managing component 201, a service packing and unpacking component 203 and a protocol converting component 204.

The data storing component 202 stores the Diameter parameter which can be configured flexibly, including various AVP data. There may be at least three data tables contained in the configuration managing component 201, wherein the first table stores message header information of the Diameter protocol; the second table stores information of all request AVPs needed for charging, and each piece of AVP information should contain the information of level structure; the third table stores information of response AVPs that the charging service needs to resolve. Furthermore, the first table may contain the following information: version, command flags, command code, application id and other parameters, which are information of a standard Diameter message header field. Furthermore, each piece of AVP information in the second table may contain the following fields: AVP code, AVP flags, vendor id, AVP level, AVP type and AVP value type, wherein the AVP code, the AVP flags and the vendor id are the standard AVP header information; the AVP code is used for exclusively identifying an AVP, the AVP flags is used for telling the receiver about how to process each attribute, and the vendor id is a manufacture id and selectable; the AVP level is a level representation of the AVP, which is a positive integer, for example, 1 represents the first-level AVP, 2 represents the second-level AVP, and so on; the AVP type is a data type of the AVP, such as Grouped, OctetString, Integer32, Integer64, Unsigned32, Unsigned64, Time, UTF8String, Enumerated; the AVP value type is a value type of a leaf node (i.e. the AVP type is not the Grouped type) of each AVP in a charging IN service, for example, 0 is the Grouped type, 1 is a caller number, 2 is a called number, and so on; the charging service may assign each AVP according to the actual AVP value classification; if the type is a particular value 10000 which represents unknown, and means that a value will be assigned to the AVP by other components. Furthermore, in the third table, the following information may be contained: AVP code, AVP level, and AVP type; a user configures the AVP code which needs to be decoded from the Diameter response message, and the system will automatically resolve the value of the AVP code.

The configuration managing component 201 provides an external interface for management, through which the maintainer can visually manage the Diameter parameter and the AVP data stored in the data storing component 202. Furthermore, the external interface may be a web access method or other access modes of HTTP.

The service packing and unpacking component 203 takes charge of extracting from the data storing component 202 the Diameter parameter and the AVP parameter to be coded to conduct logical coding, and sending the Diameter parameter and the AVP parameter to the protocol converting component 204; the service packing and unpacking component 203 also takes charge of receiving a message from the protocol converting component 204 and unpacking the message, and outputting according to the configuration of the data storing component 202.

The protocol converting component 204 takes charge of receiving the message from the service packing and unpacking component 203, and then coding the message into a standard Diameter protocol package and sending the package to the OCS; in addition, the protocol converting component 204 takes charge of receiving the standard Diameter protocol package from the OCS, and converting the standard Diameter protocol package into an internal message structure and sending the internal message structure to the service packing and unpacking component 203, then the service packing and unpacking component 203 can resolve the data which is configured by the data storing component 202 and required to be resolved.

An embodiment of the device for implementing the online charging service flexibly is given below:
a management terminal of maintainer 200 is generally configured and managed via a web browser, and is configured to configure the Diameter protocol parameter and the AVP;
the configuration managing component 201 is generally a web component, and takes charge of directly receiving a request for managing configuration from the user, and putting the request in storage to save in order, and saving the request in the data storing component 202;
the data storing component 202 is generally a database component, on which a data table structure designed for saving configuration management of the user is established;
the service packing and unpacking component 203 should not run separately, and is generally called by the IN service; the service packing and unpacking component 203 takes charge of conducting dynamic coding and decoding according to the data of the data storing component 202, and the dynamic coding and decoding is usually completed by a service coding and decoding component in the service packing and unpacking component; the service packing and unpacking component 203 communicates with the protocol converting component 204;
the protocol converting component 204 takes charge of conversion between an internal message and the Diameter protocol, and the protocol converting component 204 directly communicates with the OCS; and
the OCS is an online charging core entity which is the standard Diameter protocol externally; the OCS can complete the management of a user account, and authorize and confirm a charging request.

The method for implementing the online charging service flexibly which is provided by the exemplary embodiment includes the following steps:
Step 1: the user accesses a configuration managing server by a bs way (a web browser way) or a cs way (a client way), the configuration managing server stores data in a data storing server, wherein the data storing server can contain the information of the above three tables;
Step 2: the charging service running on an intelligent service Application Server (AS) extracts the data configured in Step 1 from the data storing server, and sends the data to a protocol conversion interface machine after conducting internal coding on the data;
Step 3: the protocol conversion interface machine receives the internal message from the intelligent service AS, converts it to the standard Diameter protocol request message and sends the message to an OCS server; and
Step 4: after processing the request, the OCS server returns a Diameter protocol response message to the protocol conversion interface machine, then the protocol conversion interface machine converts the Diameter protocol response message to the internal message and sends the internal message to the intelligent service AS; the charging service resolves, according to the AVP parameter which is stored in the data storing server and configured by the user, the internal message and outputs it for use in logical control of the charging service.

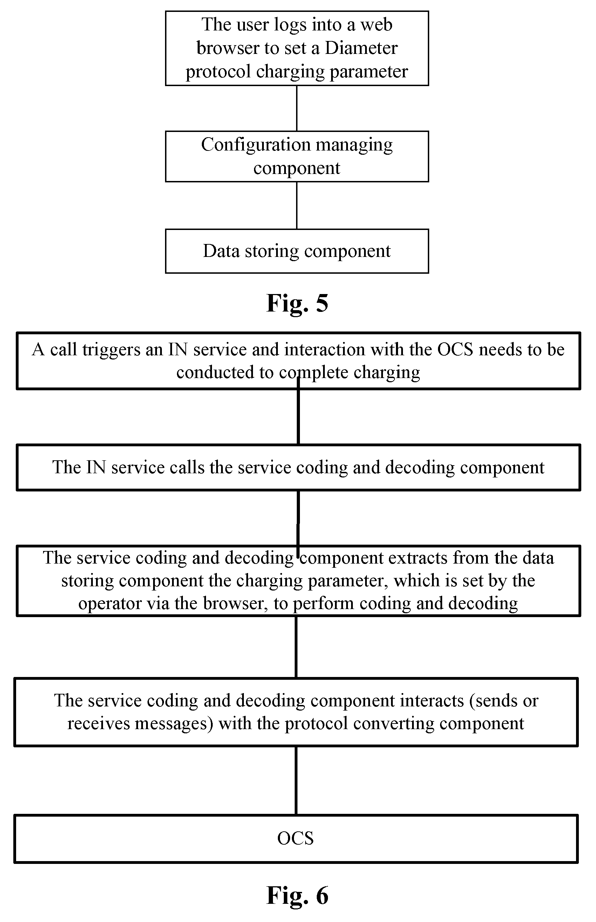

An embodiment of the method for implementing the online charging service flexibly is given below, referring to Fig. 5 to Fig. 7.

Fig. 5 provides an example of the specific implementation of configuring and updating the Diameter protocol field format of the present embodiment. The user logs into the web browser to set a Diameter protocol charging parameter, and then the Diameter protocol charging parameter is stored in the data storing component via the configuration managing component. The flow in Fig. 5 can complete the process that the user configures and manages charging data to the data storing server by the bs way or the cs way.

Fig. 6 provides an example of the specific implementation of conducting the Diameter protocol encapsulation on the charging-related information to obtain the Diameter protocol request message, interacting with the OCS, and resolving the Diameter response message. The flow in Fig. 5 mainly describes how the charging service obtains the charging parameter configured by the user from the data storing server and further dynamically conducts coding and decoding of the Diameter charging parameter, sends the charging parameter to the protocol conversion interface machine after coding, and then the protocol conversion interface machine sends the charging parameter to the OCS server; after receiving the request, the OCS server gives the response message after internal processing; the response message is first sent to the protocol conversion interface machine, and then is sent to the charging service by the protocol conversion interface machine, so that the charging service can obtain the wanted charging response information, and then controls a call.

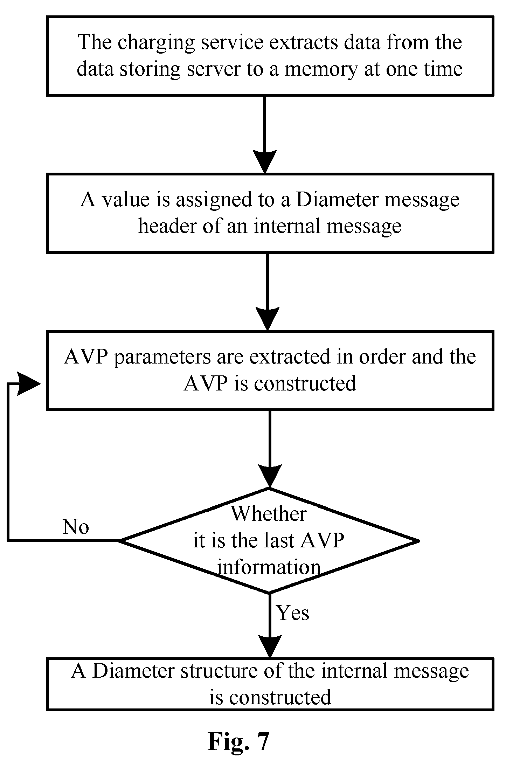

Fig. 7 provides an example of the specific implementation of conducting, according to the Diameter protocol field format and the message expression format, the message encapsulation on all the assignment information to obtain a message conforming to the message expression format. This embodiment describes in detail how the charging service conducts packing of a Diameter message according to the information extracted from the data storing server. Specifically, the charging service extracts data from the data storing server to a memory at one time, assigns a value to the Diameter message header of the internal message according to the extracted data, extracts the AVP parameters in an order corresponding to a structure relationship among the AVP fields in the Diameter protocol request message and constructs the AVP until the last AVP field is constructed, and packs the AVP fields according to the structure relationship among the AVP fields in the Diameter protocol request message to obtain the internal message.

Another embodiment of the present disclosure provides a device for interacting with the OCS, which may include:
a determining component, which is configured to determine, according to the service type of the charging service, the Diameter protocol field format corresponding to the service type;
an encapsulating component, which is configured to conduct Diameter protocol encapsulation on charging-related information of the charging service according to the Diameter protocol field format to obtain the Diameter protocol request message; and
a first interacting component, which is configured to, according to the Diameter protocol request message, interact with the OCS and request the OCS to conduct the charging processing on the charging service.

It can be seen from above that the field format needed for conducting the Diameter protocol encapsulation on the charging-related information can be obtained according to the service type of the charging service, instead of manually checking the Diameter protocol field format corresponding to the charging service and manually configuring the Diameter protocol field format, thereby improving the efficiency of online charging.

In an exemplary embodiment of the present disclosure, the determining component may include:
a determining subcomponent, which is configured to determine, according to the service type, the storage space corresponding to the service type; and
an extracting subcomponent, which is configured to extract a Diameter protocol field format stored in the storage space as the Diameter protocol field format.

In an exemplary embodiment, the device may also include:
an obtaining component, which is configured to, before the determining subcomponent determines, according to the service type, the storage space corresponding to the service type, obtain update information of the Diameter protocol field format corresponding to the service type; and
an updating component, which is configured to, before the determining subcomponent determines, according to the service type, the storage space corresponding to the service type, update, according to the update information of the Diameter protocol field format, the Diameter protocol field format stored in the storage space.

In an exemplary embodiment of the present disclosure, the encapsulating component may include:
a resolving subcomponent, which is configured to, according to the Diameter protocol field format, resolve, from the charging-related information, the assignment information which corresponds to the field parameter of each field conforming to the Diameter protocol field format; and
an encapsulating subcomponent, which is configured to conduct the Diameter protocol encapsulation on all the assignment information according to the Diameter protocol field format and the Diameter protocol expression format to obtain the Diameter protocol request message.

In an exemplary embodiment, the encapsulating subcomponent may include:
an encapsulating element, which is configured to conduct message encapsulation on all the assignment information according to the Diameter protocol field format and a message expression format to obtain a message conforming to the message expression format; and
a converting element, which is configured to conduct format conversion on the message conforming to the message expression format according to a format conversion way of converting the message expression format to the Diameter protocol expression format, to obtain the Diameter protocol request message.

In an exemplary embodiment of the present disclosure, the device may also include:
a second interacting component, which is configured to interact with the OCS, and receive from the OCS the Diameter response message sent in response to the Diameter protocol request message, wherein the Diameter response message carries the charging response information corresponding to the charging-related information; and
a de-encapsulating component, which is configured to conduct Diameter protocol de-encapsulation on the Diameter response message according to the Diameter protocol field format to obtain the charging response information.

An exemplary embodiment of the present disclosure also provides a server, which includes the above-mentioned device for interacting with the OCS.

The above is only the embodiments of the present disclosure. It should be indicated that, on the premise of not departing from the principles of the present disclosure, those ordinary skill in the art may also make a number of improvements and supplements and these improvements and supplements should fall within the scope of the claims of the present disclosure.

### Industrial Applicability

The technical solutions provided by the embodiments of the present disclosure can be applied to the field of IN communications. The field format needed for conducting the Diameter protocol encapsulation on the charging-related information is obtained according to the service type of the charging service, instead of manually checking the Diameter protocol field format corresponding to the charging service and manually configuring the Diameter protocol field format, thereby improving the efficiency of online charging.

## Claims

1. A method for interacting with an Online Charging System (OCS), comprising:
determining, according to a service type of a charging service, a Diameter protocol field format corresponding to the service type;
conducting Diameter protocol encapsulation on charging-related information of the charging service according to the Diameter protocol field format to obtain a Diameter protocol request message; and
according to the Diameter protocol request message, interacting with the OCS and requesting the OCS to conduct charging processing on the charging service.

2. The method as claimed in claim 1, wherein determining, according to the service type of the charging service, the Diameter protocol field format corresponding to the service type comprises:
determining, according to the service type, a storage space corresponding to the service type; and
extracting a Diameter protocol field format stored in the storage space as the Diameter protocol field format.

3. The method as claimed in claim 2, before determining, according to the service type, the storage space corresponding to the service type, further comprising:
obtaining update information of the Diameter protocol field format corresponding to the service type;
updating, according to the update information of the Diameter protocol field format, the Diameter protocol field format stored in the storage space.

4. The method as claimed in claim 1, wherein conducting the Diameter protocol encapsulation on the charging-related information of the charging service according to the Diameter protocol field format to obtain the Diameter protocol request message comprises:
according to the Diameter protocol field format, resolving, from the charging-related information, assignment information which corresponds to a field parameter of each field conforming to the Diameter protocol field format;
conducting the Diameter protocol encapsulation on all the assignment information according to the Diameter protocol field format and a Diameter protocol expression format to obtain the Diameter protocol request message.

5. The method as claimed in claim 4, wherein conducting the Diameter protocol encapsulation on all the assignment information according to the Diameter protocol field format and the Diameter protocol expression format to obtain the Diameter protocol request message comprises:
conducting message encapsulation on all the assignment information according to the Diameter protocol field format and a message expression format to obtain a message conforming to the message expression format; and
conducting format conversion on the message conforming to the message expression format according to a format conversion way of converting the message expression format to the Diameter protocol expression format, to obtain the Diameter protocol request message.

6. The method as claimed in claim 1, further comprising:
interacting with the OCS, and receiving from the OCS a Diameter response message sent in response to the Diameter protocol request message, wherein the Diameter response message carries charging response information corresponding to the charging-related information; and
conducting Diameter protocol de-encapsulation on the Diameter response message according to the Diameter protocol field format to obtain the charging response information.

7. A device for interacting with an Online Charging System (OCS), comprising:
a determining component, which is configured to determine, according to a service type of a charging service, a Diameter protocol field format corresponding to the service type;
an encapsulating component, which is configured to conduct Diameter protocol encapsulation on charging-related information of the charging service according to the Diameter protocol field format to obtain a Diameter protocol request message; and
a first interacting component, which is configured to, according to the Diameter protocol request message, interact with the OCS and request the OCS to conduct charging processing on the charging service.

8. The device as claimed in claim 7, wherein the determining component comprises:
a determining subcomponent, which is configured to determine, according to the service type, a storage space corresponding to the service type; and
an extracting subcomponent, which is configured to extract a Diameter protocol field format stored in the storage space as the Diameter protocol field format.

9. The device as claimed in claim 8, further comprising:
an obtaining component, which is configured to, before the determining subcomponent determines, according to the service type, the storage space corresponding to the service type, obtain update information of the Diameter protocol field format corresponding to the service type; and
an updating component, which is configured to, before the determining subcomponent determines, according to the service type, the storage space corresponding to the service type, update, according to the update information of the Diameter protocol field format, the Diameter protocol field format stored in the storage space.

10. The device as claimed in claim 7, wherein the encapsulating component comprises:
a resolving subcomponent, which is configured to, according to the Diameter protocol field format, resolve, from the charging-related information, assignment information which corresponds to a field parameter of each field conforming to the Diameter protocol field format; and
an encapsulating subcomponent, which is configured to conduct the Diameter protocol encapsulation on all the assignment information according to the Diameter protocol field format and a Diameter protocol expression format to obtain the Diameter protocol request message.

11. The device as claimed in claim 10, wherein the encapsulating subcomponent comprises:
an encapsulating element, which is configured to conduct message encapsulation on all the assignment information according to the Diameter protocol field format and a message expression format to obtain a message conforming to the message expression format; and
a converting element, which is configured to conduct format conversion on the message conforming to the message expression format according to a format conversion way of converting the message expression format to the Diameter protocol expression format, to obtain the Diameter protocol request message.

12. The device as claimed in claim 7, further comprising:
a second interacting component, which is configured to interact with the OCS, and receive from the OCS a Diameter response message sent in response to the Diameter protocol request message, wherein the Diameter response message carries charging response information corresponding to the charging-related information; and
a de-encapsulating component, which is configured to conduct Diameter protocol de-encapsulation on the Diameter response message according to the Diameter protocol field format to obtain the charging response information.

13. A server, comprising the device for interacting with the OCS as claimed in any one of claims 7 to 12.
